(19) Europäisches Patentamt
European Patent Office
Office européen des brevets

(11) **EP 2 988 544 B1**

(12) **EUROPEAN PATENT SPECIFICATION**

(45) Date of publication and mention
of the grant of the patent:
**06.04.2022   Bulletin 2022/14**

(21) Application number: **14306284.2**

(22) Date of filing: **18.08.2014**

(51) International Patent Classification (IPC):
*H04W 24/02* (2009.01)      *H04B 7/02* (2018.01)
*H04L 5/00* (2006.01)      *H04W 16/32* (2009.01)
*H04W 48/16* (2009.01)

(52) Cooperative Patent Classification (CPC):
**H04W 24/02;** H04L 5/0035; H04L 5/0048;
H04W 16/32; H04W 48/16

(54) **Cell Identification**

Zellidentifikation

Identification de cellule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.02.2016   Bulletin 2016/08**

(73) Proprietor: **Alcatel Lucent
91620 Nozay (FR)**

(72) Inventors:
• **Kucera, Stepan
DUBLIN, 15 (IE)**
• **Lopez-Perez, David
DUBLIN, 15 (IE)**

(74) Representative: **Coghlan, Judith Elizabeth Kensy
et al
Script IP Limited
Turnpike House
18 Bridge Street
Frome Somerset BA11 1BB (GB)**

(56) References cited:
**WO-A1-2013/112829      US-A1- 2014 087 720**

## Description

FIELD OF THE INVENTION

Aspects and embodiments provide a method of allocating cell identifiers to a plurality of cells operating in a wireless communications network; a computer program product and a network control node operable to perform that method.

BACKGROUND

Wireless telecommunications systems are known. In such systems, mobile communication devices (for example, mobile telephones) are operable to communicate with base stations provided by network providers.

In known wireless telecommunications systems, radio coverage is provided to network connectible devices such as mobile telephones, or wireless devices such as iPads or other similar tablets, within areas known as cells. A base station is typically located in each cell to provide radio coverage. Network connectible devices in each cell are typically operable to receive information and data from a base station and to transmit information and data to a base station.

User equipment roam through a wireless communication system. Base stations are provided which support those areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within a geographical area of service. Typically, a different antenna within a base station supports each associated sector. Each base station has multiple antennas.

Traditional base stations provide coverage in relatively large geographical areas and those cells are often referred to as "macro" cells. It is possible to provide a heterogeneous network (HetNet) where smaller sized cells are provided within macro cells. Such smaller sized cells are sometimes referred to as micro cells, metro cells, pico cells or femto cells. One way to establish a small cell is to provide a small cell base station, also known as a low power node, which provides coverage having a relatively limited range within the coverage area of a macro cell.

The transmission power of a small cell base station is relatively low and, as a result, each small cell provides a small coverage area in comparison to that provided by a macro cell and may be used, for example, to provide coverage in a network hot spot or an office or a home.

Small cells are typically provided where communications coverage provided by a macro cell is poor, or where a user wishes to use an alternative communications link provided locally by a small cell base station to communicate with a core network. Small cells can also be provided to increase capacity within a network.

Although the deployment of small cell base stations can provide advantages, unexpected consequences can occur.

Accordingly, it is desired to provide an improved network suited to the inclusion of small cell base stations.

WO2013/112829 discloses a method supporting coordinated multi point transmission and reception (CoMP). The method addresses a collision issue between reference signals and data resource elements in CoMP. It discloses a muting pattern of data channels so that the resource can accommodate cell identifiers without interference. US 2014/0087720 discloses the transmission of an entire identifier one transmission point at a time, the time for each transmission point (TP) in a group being different. It uses the quality report and identifier to select a subset of TPs and not for identifying individual TPs.

SUMMARY

The invention is defined by the appended claims.

A first aspect provides a method according to claim 1.

The first aspect recognises that small cells deployed within a macro cell layer may be used to improve capacity of a system. Provision of small cells within a network can result in both gains and losses. Gains may be achieved by offloading traffic from a macro cell to deployed small cells and it can be shown that significant capacity improvement can be achieved by means of a HetNet deployment when compared to that of a homogeneous (macro cell only) network deployment. However, there are also losses or difficulties associated with HetNet network deployments.

One such issue is that the deployment of multiple small cells within a macro cell layer can make dealing with mobility of user equipment a challenge. In particular, the provision of multiple small cells can result in very frequent handover to small cells. Existing techniques designed for operation in a homogeneous network deployment may be unsuited to a network deployment including multiple small cells.

It will be understood that operational parameters which may be appropriate to a homogeneous (macro only)

2

deployment maybe less appropriate in relation to a HetNet deployment. In particular, frequent handovers and reselection between small cells can lead to a high amount of RRC signalling. For example, in the case where two small cells are provided within the coverage area of a macro cell and user equipment moves across a coverage region supported by the small cells 1 and 2, the usefulness of handover or reselection may depend upon the nature of the movement of a user equipment across those coverage regions. In particular, for user equipment moving at high speed, setting cell reselection or handover criteria in accordance with that which might be implemented for a solely macro deployment is likely to be such that a handover or reselection event is triggered, but that such an implementation causes a high level of RRC signalling but offers very little benefit in terms of traffic offloading since the time spent by user equipment in each small cell coverage region would be relatively small. It will be appreciated that it could be beneficial if the user equipment could identify cells as being small cells and therefore use appropriate operational parameters in relation to small cells (for example, implementation of a different measurement report), such that it can avoid reselecting to a small cell when the user equipment is moving across their coverage region at high speed.

Accordingly, the first aspect recognises that appropriate operation of user equipment within a network may be dependent upon the type of base station from which user equipment may receive service and, for example, the nature of the operation of user equipment within a network. In other words, operational parameters of relevance to cell reselection or handover may be useful to user equipment when deciding how to handle movement between cells.

It will be appreciated that various heterogeneous network deployment scenarios are possible. In particular, common deployment scenarios include a first scenario in which macro and small cells operate on the same carrier frequency (intra-frequency) and those macro and small cells are connected via a non-ideal backhaul. A typical alternative scenario is one in which macro and small cells are provided, operating using different carrier frequencies (inter-frequency), those cells also being connected via a non-ideal backhaul link.

In both such typical deployment scenarios, various challenges are faced including: mobility robustness; uplink downlink imbalance between macro and small cells; an increase in signalling load (for example, signalling to a core network due to frequent handover); difficulties in relation to improvements of per user throughput as a result of utilisation of radio resource in more than one base station, and an increase in network planning and configuration effort.

Amongst those challenges, mobility robustness is of particular importance. It has been recognised that a heterogeneous network deployment may, if operational parameters are not set appropriately, result in increased handover failure or radio link failure when users move from small cells to large cells.

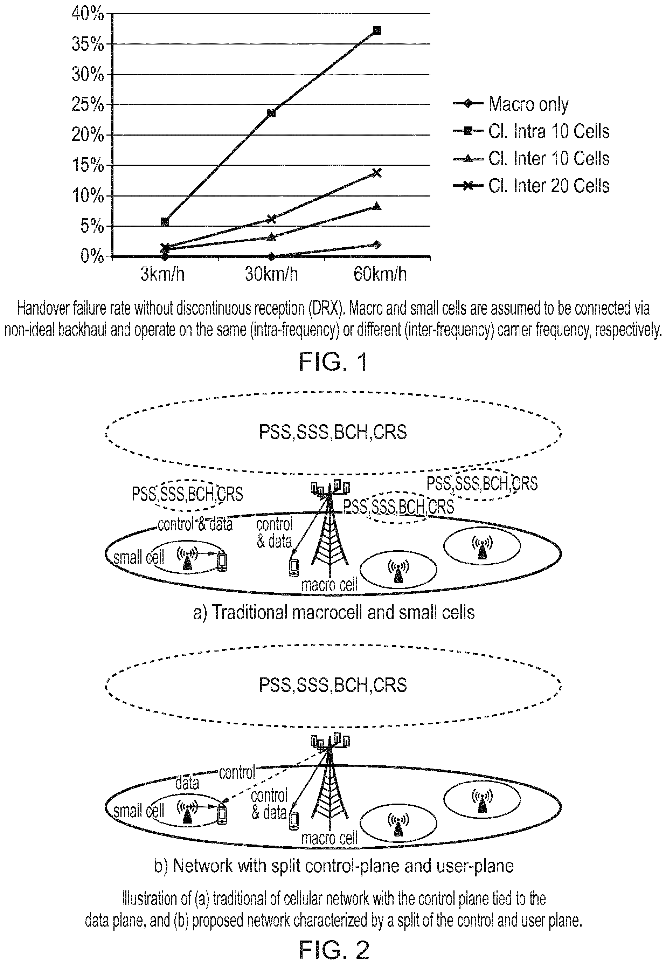

As shown in Figure 1, which illustrates schematically handover failure rate in network deployments without discontinuous reception, the handover rate in a deployment scenario where macro and small cells operate using the same carrier frequency is higher than handover failure rates in a deployment scenario where macro and small cells are provided to operate on different carrier frequencies. That higher handover failure rate may be due to higher interference between macro and small cells. It is also clear from Figure 1 that the handover failure rate in a deployment scenario in which macro and small cells are provided on different carrier frequencies is higher than that in a macro cell only network. That handover failure rate increase is due to interference in small cell carriers when handover from a small cell to a macro cell or between small cells occurs.

The first aspect recognises that smart allocation of identifiers to cells, based on the reporting or interpretation scheme to be used in relation to measurements taken and messages sent within a network in relation to those identifiers, can allow provisioning of several cells to use the same identifier, whilst maintaining an ability to independently identify each cell using the "same" identifier. That smart allocation of indicators of identity within a network may allow user equipment to provide information regarding several cells in the same resource previously provisioned for a single cell.

In particular, the first aspect recognises that in a network in which cells having overlapping regions of radio coverage are provided, one user equipment may receive an identifier broadcast from multiple mutually interfering cells. That is particularly true in dense small cell deployments. Furthermore, user equipment cannot practically feedback complete information on identifier measurement results to a serving base station, not even in the case of a single identifier measurement. User equipment may be operable to send only partial reports on identifier quality in predetermined sub-bands. Those partial reports on predetermined sub-bands are standardised and that standardisation has been implemented in order to reduce network signalling overhead. The first aspect recognises that it is possible to use those features of network operation to an advantage.

The identifier comprises: a Channel State Information-Reference Signal (CSI-RS). It will be appreciated that it is possible to substitute explicit small cell identifiers for implicit small cell identifiers typically unrelated to handovers. In particular, the usage of Channel State Information Reference signals (CSI-RS) can be used to provide a means of small cell identification. It has also been recognised that it is possible to use cell selection and re-selection and handover mechanisms which operate on the basis of Channel State Information Reference signals (CSI-RS) and, in particular, their strength or quality measurements.

Each portion of CSI-RS is selected to lie within a frequency sub-band. It will be appreciated that the portions of identifier according to the reporting scheme may be spaced in time and/or in frequency resource. Accordingly some embodiments may allocate frequency portions and/or time portions of an identifier to the at least two of the plurality of cells.

The wireless communications network comprises: a heterogeneous network deployment and the plurality of cells comprise a plurality of small cells deployed within a coverage area of a macrocell. In one embodiment, the wireless communications network comprises: a heterogeneous network deployment configured to operate according to phantom cell techniques. Within a phantom cell network deployment it will be appreciated that typically a small cell cannot be identified on the basis of explicit control plane features; for example, acquisition signals, system information and/or cell reference signals. As a result, other implicit means of small cell identification are required in order to implement, for example, appropriate cell selection procedures.

In one embodiment, the cells determined to be most mutually interfering may be grouped together on the basis that such a grouping minimises the maximum distance amongst the group cells. Although both approaches can be seen as theoretically dual, the minimum distance maximising approach is typically preferred, given practical advantages. For example, if used with a fingerprinting based approach to cell identification the clustering of small cells into groups according to the maximised minimum distance may improve cell identification reliability by offering a higher number of geographically distinct patterns of identifier assignment.

A second aspect provides a computer program product according to claim 3.

A third aspect provides a network control node according to claim 4.

The identifier comprises: a Channel State Information-Reference Signal (CSI-RS). Each portion of CSI-RS is selected to lie within a frequency sub-band.

The wireless communications network comprises: a heterogeneous network deployment and the plurality of cells comprise a plurality of small cells deployed within a coverage area of a macrocell.

The wireless communications network comprises: a heterogeneous network deployment configured to operate according to phantom cell techniques.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates handover failure rate in a number of network deployments operation without discontinuous reception;
Figure 2(a) illustrates a traditional cellular network with the control plane tied to the data plane;
Figure 2(b) illustrates a network characterized by a split of the control and user plane;
Figure 3 illustrates schematically an example of CSI-RS collision and confusion;
Figure 4 illustrates schematically CQI reporting types;
Figure 5 illustrates a typical structure of sub-bands and bandwidth parts;
Figure 6 illustrates schematically dynamic partitioning of a CSI-RS sub-band among multiple cells with the capability to operate in sleep cycles, where the two subplots indicate two cases of cell activity; and
Figure 7 shows an exemplary algorithm for determining the strongest group cell by using sequential reduction of the measurement bandwidth

DESCRIPTION OF THE EMBODIMENTS

Before discussing the embodiments in any more detail, first an overview will be provided. It will be appreciated that mobility performance may be enhanced in numerous ways. One solution which may be used to enhance mobility performance is that of a phantom cell. The "phantom cell" or "soft-cell" approach is based upon the concept of dual connectivity.

Figure 2a illustrates schematically a traditional cellular network with a control plane tied to a data plane and Figure 2b illustrates a network characterised by a split of control plane and data plane. According to the phantom cell approach, Radio Resource Control (RRC) diversity can be provided via dual connectivity. Accordingly, as long as user equipment is able to maintain a connection to a cell providing radio resource diversity it may lead to a more successful handover performance. The phantom cell concept is implemented such that a small cell within a heterogeneous network serves user equipment only on the data plane, whilst a macro cell is primarily reserved to serve user equipment in relation to control plane provision. That macro cell is also operable to provide data communication to user equipment which are not connected to any small cell.

The phantom cell concept assumes that the control plane is provided by a macro cell to maintain good connectivity and mobility to user equipment. The macro cell also works as a normal cell supporting both control plane and user plane signalling for those user equipment connected directly to the macro cell. On the other hand, the user plane can be provided by a small cell to boost user data rate where it is more appropriate for user equipment to be connected to that small cell. However, in relation to a deployment in which phantom cell techniques are deployed, the small cells are not conventional "cells" since they are not configured with cell-specific signals or channels; that is to say, there are no Primary or Secondary Synchronisation Signals (PSS/ SSS), Cell-specific Reference Signals (CRS), Master Information Blocks or System Information Blocks (MIB/ SIB) or similar. As a result, the small cells are essentially "invisible" to user equipment operating in a conventional manner. The small cells in such a deployment are intended only to carry user traffic. RRC connection procedures between a phantom cell and a user equipment (for example, procedures such as channel establishment and channel release) are managed by the macro cell. In essence, a phantom cell provides a one-to-one connection to user equipment. However, that one-to-one connection to user equipment is not one in which there are cell-specific signals or channels. Such a phantom cell deployment can result in a flexible and efficient overall network operation.

One consequence of implementation of a phantom cell deployment is that typically only one scheduler, either that of a macro cell or a small cell, is in charge of providing data (including PFICH, PDCCH and PHICH channels) to a user. Such an arrangement simplifies network operation in comparison with so called "dual connectivity" network operation which typically require co-ordination of more than one scheduler. It will be understood that a phantom cell network deployment may allow a network operator to maintain basic mobility and connectivity performance to user equipment even when only a small number of small cells are deployed.

Cell Identification

Within a phantom cell network deployment it will be appreciated that typically a small cell cannot be identified on the basis of explicit control plane features; for example, acquisition signals, system information and/or cell reference signals. As a result, other implicit means of small cell identification are required in order to implement an appropriate cell selection procedure, that cell selection procedure being a prerequisite of any efficient user plane transmission mechanism.

However, it will also be appreciated that the number of CSI-RS available within a network may be limited. In particular, CSI-RS available for small cell identification may be limited to 40 by LTE standards, and such a limit on available potential identifiers may cause some cell identification issues. In reality, in relation to CSI-RS values which may be available, the number is lower than 40 since some reference signals are reserved to enable MIMO or COMP operation. In particular, a certain fraction of the CSI-RSs may be reserved to enable MIMO/CoMP operation. If MIMO operation with x antennas is assumed, then there are 40/x distinct CSI-RSs usable for cell identification. However, it will also be appreciated that use of a reduced number of identifiers (for example, CSI-RS), in order to help identify small cells, may help to speed up handovers and mobility of user equipment within a network and assist in the saving of user equipment battery life since there is a reduced number of measurements that user equipment may have to perform for cell selection and handover procedures.

It will be appreciated that in comparison to standard cellular networks not operating using a phantom cell concept, there are a significantly reduced number of available potential identifiers. In a typical non-split cellular network, 504 Physical Cell Identifiers (PCIs) are typically available. It will be appreciated that the limited CSI-RS availability requires an efficient CSI-RS management system in order to avoid collision and confusion problems in small cell identification processes.

An identifier (CSI-RS) collision occurs if at least two neighbouring small cells use the same identifier (CSI-RS) as an indication of their identity or, in other words, their "soft identity". An identifier collision leads to an incorrect cell identification and poor channel estimation by user equipment in the vicinity of those colliding cells. Identifier confusion occurs when, for example, a macro cell is not able to distinguish amongst multiple small cells using the same identifier; for example, CSI-RS. Consequently, macro cell control mechanisms, such as RRC management, may be performed incorrectly and cause a disruption to data service of user equipment.

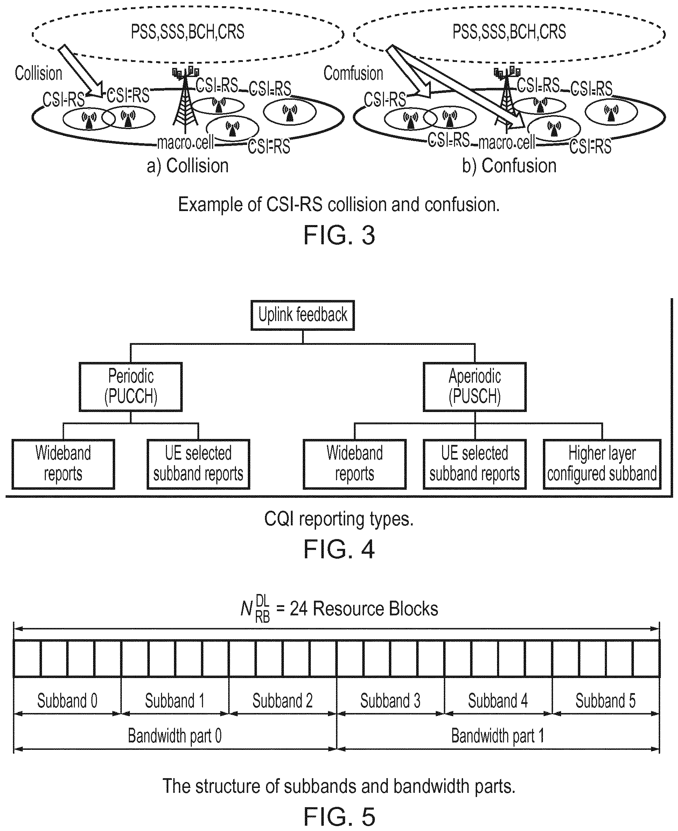

Figure 3 illustrates schematically examples of both identifier collision and identifier confusion. It will be appreciated that the collision problem may be dynamically resolved in a relatively simple manner since small cells may be operable to detect whether neighbouring small cells are using the same identifier and take corrective action by configuring themselves to use a different identifier. Such distributed schemes can be shown to converge to a stable solution. However, it will be appreciated that small cells are typically unable to find out whether a given identifier is in use by other remote small cells within the same umbrella macro cell coverage, since the coverage area of the macro cell is often very large.

Aspects and embodiments may help to solve or mitigate the confusion problem. Aspects and embodiments relate to a network-based method to efficiently avoid or mitigate likelihood of encountering a confusion problem whilst using a limited number of CSI-RSs identifiers. In particular, aspects and embodiments may provide a means to increase an effective number of identifier "pilot signals" in a split-plane (phantom cell) network deployment. The benefits of such an approach include compliance with existing network standards.

Cell identification within a network have historically been resolved using various techniques, including smart allocation of primary cell identifiers (PCIs) and fingerprint methods.

In order to avoid PCI confusion in a network, a source cell in a typical homogeneous UMTS or LTE network typically operates to ensure user equipment is configured to obtain system information relating to a target cell. Following acquisition of system information, user equipment operate to transmit a measurement report to the source cell. The measurement report comprises: an evolved cell global identifier (ECGI), tracking area identity, close subscriber group identity (CSG), CSG indicator and CSG membership status of a target cell. Since the ECGI is unique to each cell, even if multiple cells share the same PCI, knowledge of the ECGI of the target cell at, for example, an RNC or MME, can resolve any ambiguity at the network due to PCI confusion.

Such an approach is not applicable in a phantom cell network deployment since in such a deployment, the small cells do not broadcast any system information, Furthermore, performing the method is time consuming and may not be able to resolve confusion in good time to support operation of highly mobile user equipment. Delays in resolving confusion may lead to handover failures.

According to fingerprint methods, in order to differentiate amongst neighbouring cells using the same identifier (for example, PCI) a network may be operable to use knowledge of the identifiers with cell geographical locations within the network and/or user equipment reported received signal strength or quality measurements.

In particular, a macrocell can use user equipment reported "received signal strength" measurements of pilot signals of a target cell together with those relating to any neighbouring cell(s). The macro cell is then operable to search for a "best match" between reported user equipment measurements and a fingerprint database comprising an extensive number of pilot signal measurements, for example, all small cells within a macrocell coverage region. That database comprises a plurality of parameters in relation to each cell in multiple given geographical locations and reported historical user equipment measurements. That database can be pre-stored or dynamically built up within the network.

Fingerprint methods may fail to provide a good performance if the number of identifiers is not sufficiently large and/or if the identifiers are not assigned to cells such that a large number of distinct identifiable measurement patterns exist as a function of user equipment location within a network. It will be appreciated that it is the measurement patterns which exist as a function of user equipment location of the network which is the primary identification input of such a fingerprinting method.

Such fingerprinting methods also require that fingerprint databases are dynamically updated according to changes in network topology; for example, the deployment of further small cells within a network. That dynamic updating may be a complex task if the process is not automatic.

Aspects and embodiments can take into account various facts about a phantom cell network deployment. In particular, one user equipment may receive a CSI-RS broadcast from multiple mutually interfering small cells. That is particularly true in dense small cell deployments. Furthermore, user equipment cannot practically feedback complete information on CSI-RS measurement results to a serving base station, not even in the case of a single CSI-RS measurement. User equipment is operable to send only partial reports on the CSI-RS quality in predetermined subbands. Those partial reports on predetermined sub-bands are standardised and that standardisation has been implemented in order to reduce network signalling overhead.

It has been recognised that it is possible to use CSI-RS as a group level identifier. That is to say, a CSI-RS maybe used as an identifier of a set of multiple candidate small cells.

In order to distinguish amongst individual small cells which form a group sharing the same CSI-RS, a unique CSI-RS broadcast pattern or configuration is used by each small cell in that group in the frequency domain. According to some arrangements, those patterns are generated to be mutually orthogonal and use exclusive physical resources to coincide exactly with sub-band patterns which are configured for channel quality indicator reports in limited feedback systems.

It will be appreciated that such an arrangement may result in various network operation improvements. In particular, the overall number of CSI-RS measurements made by user equipment can be reduced, which may result in faster cell identification and lower battery energy usage. Furthermore, the number of available soft cell identities can be increased by a factor equal to the number of mutually orthogonal CQI reporting patterns which are implemented. Such arrangements may also recognise that standardised signalling for CQI configuration may be used to dynamically cope with activation of new group cells; for example, if they awake from a sleep mode, or the deactivation of active cells for example, when they enter a sleep cycle, without the need to change the sensitive CSI-RS assignment to the small cells in the group. Implementation of CSI-RS groups can allow a more stable network configuration and minimise network set-up overheads.

Arrangements may be such that user equipment are unaware of the background CSI-RS management being performed by network cells, thereby making arrangements fully compatible with unmodified legacy handsets.

Arrangements described in more detail below may implement a method in which multiple small cells (forming a small cell group) may share the same CSI-RS. For example, arrangements may be implemented such that a small cell group requires a minimum distance between small cells in the group sharing a CSI-RS. In some arrangements the minimum distance between the small cells within a group is maximised within the hosting macro cell coverage region.

According to some arrangements, each group small cell may be operable to meet part of its CSI-RS resource such that: remaining active resources corresponding exactly to subbands or a standardised measurement pattern based upon which user equipment can be configured to generate a partial CQI report on the channel stay information (CSI); and the group small cells are configured such that they use mutually orthogonal (non-overlapping) sub-bands whilst collectively occupying all the available CSI-RS resources.

Accordingly, upon a service request from a cell, an RRC_idle user equipment can be requested (for example, by a temporary serving cell) to submit a full planned CQI report based upon which the best serving cell can be determined using the knowledge of the CSI-RS patterns of individual cells of the group. Accordingly, if necessary, a handover of the user equipment to the most suitable small cell in the group can be performed.

Each RRC_connected user equipment may be configured to use only the CSI-RS measurement patterns which match exactly the patterns employed for the CSI-RS broadcast. Accordingly, each individual CQI report concerns only the CSI-RS resources that have been assigned to a single cell both in time and the frequency domain. Depending on the reporting mode, the measurement pattern can change over time and allow user equipment to explore all surrounding small cells.

In terms of a data exchange protocol, CSI-RS measurements can be conceived as measurements of a serving cell or as an interfering cell, as in the case of Co-Ordinated Multi-Point transmissions (COMP).

An example of one particular arrangement is set out in more detail below.

Example System

According to the example, an LTE HetNet is provided in which small cells share communication channels with hosting macro cells. That is to say, the example comprises a co-channel small cell deployment. Each macro cell is responsible for provisioning the control plane and is able to engage in user plane transmissions as appropriate. The small cells provided are responsible only for local user plane transmissions and mute their control plane signals.

CSI-RS

According to this particular example, CSI-RS signals are used for small cell identification.. In order to identify small cells in the network for cell selection, reselection and handover purposes, CSI-RS signals are used in the same manner as standard control plane CRS signals within conventional LTE networks. That is to say, the hosting macro cell is responsible for the small cell CSI-RS assignment, as well as being responsible for the management of data bearers of the small cell user equipment.

The exact CSI-RS structure, including the exact set of resource elements used for CSI-RS in a resource block, depends on the number of CSI-RS configured within a cell and may, for example, be different for different cells within a network. In total, there are 40 possible positions for the CSI-RS reference symbols within a resource block pair. That is to say, if using CSI-RS in the context of aspects and embodiments described herein, there exist up to 40 distinct CSI-RS values.

A CSI-RS transmission made by a small cell typically covers the entire cell bandwidth. In the time domain the CSI-RS can be transmitted with different periods ranging from a period of 5 ms (every fifth sub-frame) to 80 ms (every eighth sub-frame). With a five ms period the overhead per CSI-RS is roughly 0.12% per CSI-RS; that is to say, one resource element per CSI-RS per resource block pair, but only in every fifth sub-frame. Longer periods result in correspondingly less overhead. The exact sub-frame in which CSI-RS are transmitted in a cell may be configured, thus allowing for separation of CSI-RS transmissions between cells also in the time domain, in addition to using different sets of resource elements within the same sub-frame.

It will be appreciated that LTE standards allow for the configuring of several sub-sets of CSI-RS resource elements as "muted". A muted CSI-RS has the same structure as a normal CSI-RS except that nothing is actually transmitted on the corresponding resource elements. The muted CSI-RS can thus be seen as a normal CSI-RS with zero power. Muted CSI-RS values may be used to create transmission holes which correspond to actual CSI-RS transmissions in other neighbouring cells. There may be one or more sets of muted CSI-RS in any given cell.

CQI Reporting

User equipment are operable to measure and report CSI-RS quality in a known CQI format. User equipment is typically operable to perform either periodic or aperiodic CQI reporting. In both time domain modes, CQI reporting can be classified in the frequency domain as wide-band CQI reporting or sub-band CQI reporting. Wide-band CQI is computed in the same manner as sub-band CQI, but the considered bandwidth comprises all the sub-bands for which individual sub-band CQI are generally generated.

Figure 4 illustrates schematically possible CQI reporting types.

Figure 5 illustrates schematically the structure of sub-bands and bandwidth parts.

Periodic CQI Reporting

In the case of periodic CQI reporting, when a sub-band CQI is reported user equipment is operable to cycle through different (pre-defined) sub-bands from one reporting instance to the next. This allows for sub-band CQI reporting without a requirement for too much overhead in the uplink. It will be understood that a CQI report describes channel quality over the set S of all the sub-bands.

Table 1 - *Subband size (k) and bandwidth parts (J) vs. downlink system bandwidth in periodic CQI reporting.*

| System Bandwidth $N_{RB}^{DL}$ | Subband Size | Bandwidth Parts |
|---|---|---|
| 6-7 | NA | NA |
| 8-10 | 4 | 1 |
| 11-26 | 4 | 2 |
| 27-63 | 6 | 3 |
| 64-110 | 8 | 4 |

Table 1 illustrates sub-band size (k) and bandwidth parts (J) compared to downlink system bandwidth in relation to periodic CQI reporting schemes.

Aperiodic CQI Reporting

In relation to aperiodic CQI reporting, user equipment may be operable to comply with a request to report CQI from multiple sub-bands in a single report. The user equipment is operable to report on sub-bands either given by a higher layer message or on "M" sub-bands with the highest CQI values for a given M. A wideband CQI may also be reported. The supported sub-band size k for higher layer configured sub-band feedback is the same as that for periodic reporting. As a CQI is indicated for each requested sub-band, aperiodic CQI reporting provides for fine frequency granularity but also has the highest overhead. User equipment may report one sub-band CQI for each sub-band, together with an overall wideband CQI.

Table 2 - *Subband size (k) and number of subbands (M) vs. downlink system bandwidth in aperiodic CQI reporting.*

| System Bandwidth | Subband Size (k) | M |
|---|---|---|
| 6-7 | NA | NA |
| 8-10 | 2 | 1 |
| 11-26 | 2 | 3 |
| 27-63 | 3 | 5 |
| 64-110 | 4 | 6 |

Table 2 illustrates sub-band size (k) and number of sub-bands (M) compared to downlink system bandwidth in relation to aperiodic CQI reporting schemes.

Identification of Small Cell Group

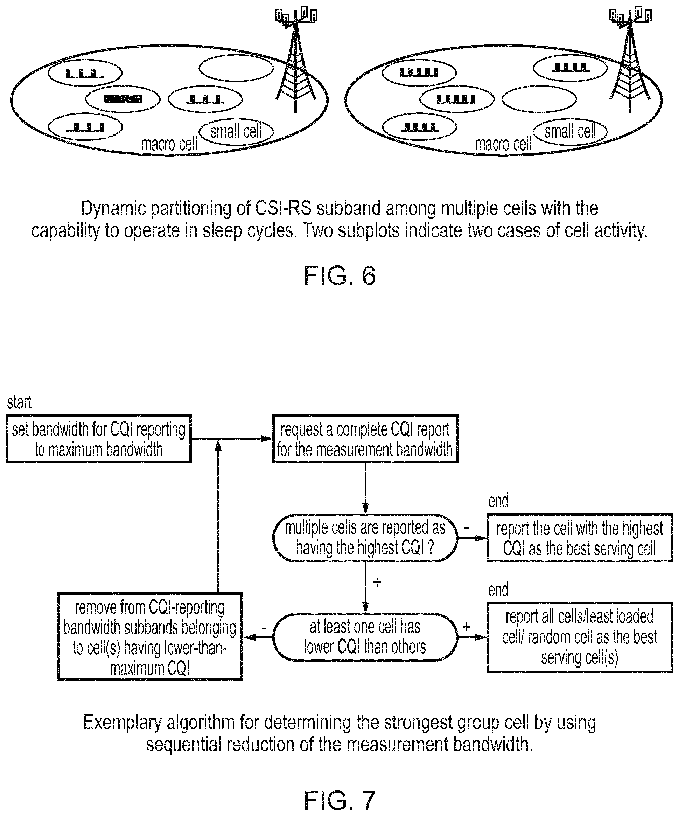

Figure 6 illustrates schematically dynamic partitioning of a CSI-RS sub-band between multiple cells with the capability to operate in sleep cycles. The two sub-plots in different colours indicate two cases of cell activity.

As shown schematically in Figure 6, a network may be configured such that a set of small cells is assigned the same CSI-RS. That assignment of the same CSI-RS allows high level identification of that set of small cells. The small cells showing the same CSI-RS identifier become a so-called "cell group". A macro cell may host a number of small cells within its coverage area and those small cells may be split into multiple cell groups. It will be appreciated that the number of cell groups is, in a preferred arrangement, smaller than the number of available CSI-RS values. However, it will be appreciated that hierarchical re-use of CSI-RS may be used to prevent group confusion within a macro cell coverage region.

A group of cells may be configured according to one of various approaches. For example, the cells may be grouped using a greedy graph colouring approach and distributively adopt the weakest CSI-RS on the basis of local CSI-RS measurements. Such grouping operates to achieve a goal of maximising minimum distance between group cells. Convergent algorithms to this end are known to those skilled in the art.

Alternatively, the cells determined to be most mutually interfering may be grouped together on the basis that such a grouping minimises the maximum distance amongst the group cells. Although both approaches can be seen as theoretically dual, the minimum distance maximising approach is typically preferred, given practical advantages. For example, if used with a fingerprinting based approach to cell identification the clustering of small cells into groups according to the maximised minimum distance may improve cell identification reliability by offering a higher number of geographically distinct patterns of CSI-RS assignment.

Single Cell Identification

Assuming there are end cells in a small cell group, the CSI-RS resources of that group are partitioned into N non-overlapping fragments. To support this, each small cell broadcasts the CSI-RS pilot signal over exactly one of the N resource fragments and mutes resources of the remaining $N-1$ fragments which are assigned to the other small cells within the group.

Such an arrangement allows CSI-RS resources to be partitioned among group cells so that the resources coincide exactly with sub-bands in which the user equipment can be configured by a cell to measure. User equipment is then operable to report the CSI-RS quality in the required CQI form and then that measurement relates to a single small cell. In other words, each group small cell mutes a part of the CSI-RS resource such that the remaining active resource correspond exactly to the standardised sub-band measurement pattern. The group small cells use mutually orthogonal (non-overlapping) sub-bands but collectively occupy all the available CSI-RS resources. An example of that operation is shown schematically in Figure 6.

In order to find a best serving small cell, user equipment may be temporarily assisted by a serving cell. The temporary serving cell does not necessarily need to be the best cell in terms of pilot signal strength and it can be any cell whose pilot signal is received at the user equipment above a minimum threshold, thus guaranteeing a minimum quality or reliability of the temporary service, and it may of course be any small cell which has a current user data load low enough to accommodate some predefined overhead related to aperiodic CQI reports received from user equipment. User equipment may issue a service request via the macro cell Random Access Channel (RACH) and the user equipment is then assisted by the network, particularly the temporary serving cell, in finding an appropriate serving cell.

The temporary serving cell is operable to reply to the user equipment service request with a standard transmission grant containing only a request that the user equipment performs an aperiodic CQI report upon the entire system bandwidth. The full CQI report will indicate the pilot signal strength of multiple CSI-RS, therefore all groups of small cells. That full CQI report can be used by the temporary serving cell to determine the strongest group small cells having the highest CQI. That is to say, the temporary serving cell is operable to determine the best serving cell on the basis of the knowledge of the individual CSI-RS broadcast patterns. A standard handover of the user equipment from the temporary serving cell to the best serving cell can then be performed if required.

Measurements and evaluation of multiple CSI-RS is reported by LTE standards.

Multiple requests for aperiodic reports may be issued by the temporary serving cell even in a periodic manner (the minimum reporting interval is one sub-frame or 1 ms).

For example, one arrangement may provide for iterative aperiodic CQI reports such that they can be used to distinguish multiple groups of small cells with equal CQIs. That is to say, there may be CQI ambiguity caused by the fact that CQIs are coded differently with respect to wideband CQI as well as quantized to a predefined set of reportable levels. Such ambiguity may occur when the CSI-RS strength differences are smaller than the current reporting CQI resolution; for example, when cells are grouped based on their physical proximity, or in dense deployments.

To resolve such a CQI ambiguity, sequential elimination of the weakest cells and corresponding reduction of the CSI-RS measurement bandwidth specified in the aperiodic CQI request can be used to improve the dynamic range of CQI reporting.

Figure 7 illustrates schematically one example algorithm for determining the strongest group cell by using sequential reduction of the measurement bandwidth. In the example shown in Figure 7 there may be, for example, 16 different levels of wideband CQI (4 bits) which is a resolution typically sufficient to determine the strongest cell.

Otherwise, if the absolute CQI level indicates that it is possible to make a reliable data transmission at the desired data rate, then CQI ties can be broken randomly to make absolute cell association decisions without relying on relative comparisons between small cells.

Each active user equipment will, according to methods described immediately previously, be associated with an appropriate serving cell. Those active user equipment may be configured to use only the CSI-RS measurement patterns which match exactly the patterns employed for the CSI-RS broadcast and, thus, each individual CQI report concerns only the CSI-RS resource which have been assigned to that cell, both in time and in frequency domain.

In this context it is possible to configure the actual cell CSI-RS broadcast on the basis of the "frequency scanning/ hopping" principle of the periodic CQI reporting mode implemented by the user equipment. The CSI-RS transmission pattern:

i) homogeneously spans the entire system bandwidth; and
ii) cyclically rotates in time to progressively cover all the bandwidth resource.

In one example, every Nth sub-band can be used for the CSI-RS broadcast whereby the absolute offset of the pattern is varied from 1 to $N-1$ over $N$ subframes. Accordingly, a cell is able to reconstruct, in a standard manner, the CQI report from user equipment on the entire band and enable frequency-dependent scheduling, which is a performance-wise important feature of the techniques used in reporting to allow efficient operation of an LTE network.

The standard periodic CQI reporting mode is requested by user equipment. Accordingly, the cell scheduler obtains complete CQI information required for wideband frequency selective scheduling without unnecessary overhead. Different time offsets may be used in some examples for cells using the same pattern for scanning the system bandwidth.

LTE standards allow for efficient configuration of user equipment to report CQI, not only for non-muted CSI-RS resources of the serving cell, but also in relation to the muted CSI-RS resources; that is to say, the resources of the neighbouring cells.

Simultaneous reports on both serving and non-serving cells may allow for reduction in delays associated with CSI-RS measurements and reporting, and the overall delay in cell selection, re-selection or handover as appropriate can ensure efficient support of mobility within a network and that there is a sufficiently high dynamic range in relation to CQI reports.

It will be appreciated that implementations of methods described herein may operate such that whenever a new small cell becomes active (for example, upon wake-up from sleep mode) the other group cells may quickly reconfigure their muted CSI-RS resources so that all group cells use the same proportion of available CSI-RS resource. In this manner, higher reliability of CSI-RS measurements can be ensured since total transmission energy of each cell is the same, assuming the same transmit power. Analogously, group cells may be operable to re-use resource vacated by a cell which becomes inactive.

Methods described herein may avoid complex CSI-RS reassignment in a network with dynamically active cells. Moreover, CSI-RS assignment may be tied to geographical cell distribution since changes to CSI-RS assignment may affect neighbouring cell relationships. It will be appreciated that CSI-RS management and allocation may be a laborious task and methods described herein may mitigate work involved in assignment and reassignment of CSI-RS to small cells.

A further application of aspects, embodiments and arrangements described can be seen from the following example: multiple base stations may engage in a coordinated multi-point transmission to a given user equipment. In other words, the user equipment receives data signals from multiple base stations. In order to distributively coordinate the transmission resources and scheduling strategies among the cooperating base stations without the need of exhaustive real-time background data exchange, methods as described in relation to cell identification can be applied.

Each base station can be allocated a segment of a CSI-RS resource. The segment size and location may correspond to the size and location of a subband over which the user equipment can be configured to report the channel state information (for example, CQI, PMI, RI). The total number of CSI-RS resources per base station can be updated on a slow time scale on the basis of actual user equipment traffic.

In accordance with methods described herein user equipment may be operable to report the channel state information of the subbands to all cooperating base stations. LTE standards allow for the configuration of multiple reporting processes.

Each base station can therefore be informed not only about the quality of its own channel to the user equipment, but also obtains information regarding the quality of the user equipment's channels to other cooperating base stations. That information may be sufficient to implement efficient distributed scheduling. For example, a base station can schedules its data to the user equipment on resources in which it has the best channel quality.

Methods described may be less sensitive to interference relationships among cells and how accurately that has been determined. Underestimating interference between two cells when assigning CSI-RS to those cells may result in identity collision, whereas the proposed scheme may avoid identity collision by potentially requiring more measurements on several sub-bands of the same CSI-RS or on several CSI-RS.

Aspects may provide a standard compliant method to support mobility and, in particular, cell selection, re-selection and handover within a network deployment in which phantom cell techniques are utilised. Methods described may allow for a small number of CSI-RS measurements to be taken by user equipment which can allow for faster cell identification and lower overall battery usage. Furthermore, the number of available small cell or soft cell identities can be increased by a factor equal to the number of mutually orthogonal CQI reporting patterns. In the particular implementation described in detail, standardised signalling for CQI configuration may be used to dynamically cope with activation of new group cells or deactivation of active cells without altering the sensitive CSI-RS assignment to small cell groups. Such an approach may avoid network configuration instability and network signalling overhead.

Methods described may substantially simplify performance of other complementary cell identification techniques by increasing the number of implicit identifiers available for small cell identification whilst keeping low the number of associated measurements.

By exploiting limited feedback which is implemented in relation to single CQI measurements, methods may provide more reports on cell pilot signal strength per unit of time than alternative schemes. That efficiency can result in better overall energy efficiency and speed of cell selection and reselection processes.

A person of skill in the art would readily recognize that steps of various above-described methods can be performed by programmed computers. Herein, some embodiments are also intended to cover program storage devices, e.g., digital data storage media, which are machine or computer readable and encode machineexecutable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention as defined in the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A method performed at a network control node of allocating Channel State Information - Reference Signals, CSI-RSs to a plurality of cells operating in a wireless communications network, the plurality of cells being arranged to comprise at least one region of overlapping radio coverage;

   wherein said wireless communications network comprises an LTE co-channel heterogeneous network deployment and said plurality of cells comprise a plurality of small cells deployed within a coverage area of a macrocell, the heterogeneous network deployment being configured to operate according to phantom cell techniques in which a small cell does not transmit control plane signals and so cannot be identified on the basis of explicit control plane features;
   the method comprising:
   splitting the plurality of small cells into multiple small cell groups, and for each small cell group:

   (i) assigning a CSI-RS to all the small cells in said each small cell group;
   (ii) partitioning the CSI-RS resources corresponding to the assigned CSI-RS into N mutual orthogonal non-overlapping frequency sub-bands; and

(iii) instructing each of the small cells in said each small cell group to broadcast the assigned CSI-RS over exactly one of the N sub-bands and mute the CSI-RS resources of the remaining N-1 frequency sub-bands which are assigned to the other small cells within said each small cell group.

2. A method according to claim 1, wherein splitting the small cells into groups comprises: grouping said plurality of cells determined to be most mutually interfering in accordance with said determined maximum group size such that maximum distance between cells of a group is minimised.

3. A computer program product comprising instructions to cause a network control node to perform the method of claim 1 or 2.

4. A network control node operable to allocate Channel State Information - Reference Signals, CSI-RSs to a plurality of cells operating in a wireless communications network, the plurality of cells being arranged to comprise at least one region of overlapping radio coverage;

wherein said wireless communications network comprises an LTE co-channel heterogeneous network deployment and said plurality of cells comprise a plurality of small cells deployed within a coverage area of a macrocell, the heterogeneous network deployment being configured to operate according to phantom cell techniques in which a small cell does not transmit control plane signals and so cannot be identified on the basis of explicit control plane features;
the network control node comprising logic configured to:
split the plurality of small cells into multiple small cell groups, and for each small cell group:

(i) assign a CSI-RS to all the small cells in said each small cell group;
(ii) partition the CSI-RS resources corresponding to the assigned CSI-RS into N mutual orthogonal non-overlapping frequency sub-bands; and
(iii) instruct each of the small cells in said each small cell group to broadcast the assigned CSI-RS over exactly one of the N sub-bands and mute the CSI-RS resources of the remaining N-1 frequency sub-bands which are assigned to the other small cells within said each small cell group.

**Patentansprüche**

1. Verfahren, das an einem Netzwerk-Steuerknoten durchgeführt wird, zum Zuweisen von Channel State Information-Referenzsignalen (CSI-RS) zu einer Vielzahl von Zellen, die in einem drahtlosen Kommunikationsnetzwerk betrieben werden, wobei die Vielzahl von Zellen dafür ausgelegt sind, mindestens einen Bereich mit überlappender Funkabdeckung zu umfassen;

wobei das drahtlose Kommunikationsnetzwerk eine heterogene LTE-Zweitkanal-Netzwerkumgebung umfasst und die Vielzahl von Zellen eine Vielzahl von kleinen Zellen umfasst, die innerhalb eines Abdeckungsbereichs einer Makrozelle betrieben werden, wobei die heterogene Netzwerkumgebung dafür konfiguriert ist, gemäß Phantomzellentechniken betrieben zu werden, bei denen eine kleine Zelle keine Steuerebenensignale überträgt und daher nicht anhand expliziter Steuerebenenmerkmale identifiziert werden kann;
wobei das Verfahren umfasst:
Aufteilen der Vielzahl von kleinen Zellen in mehrere Gruppen kleiner Zellen und für jede Gruppe kleiner Zellen:

(i) Zuweisen eines CSI-RS zu allen kleinen Zellen in jeder Gruppe kleiner Zellen;
(ii) Partitionieren der CSI-RS-Ressourcen, die dem zugewiesenen CSI-RS entsprechen, in N wechselseitig orthogonale, nicht überlappende Frequenzteilbänder; und
(iii) Anweisen jeder der kleinen Zellen in jeder Gruppe kleiner Zellen, das zugewiesene CSI-RS über genau eines der N Teilbänder zu senden und die CSI-RS-Ressourcen der verbleibenden N-1 Frequenzteilbänder, die den anderen kleinen Zellen innerhalb jeder Gruppe kleiner Zellen zugewiesen sind, stumm zu schalten.

2. Verfahren nach Anspruch 1, wobei das Aufteilen der kleinen Zellen in Gruppen umfasst:
Gruppieren der Vielzahl von Zellen, die als sich gegenseitig am meisten störend ermittelt wurden, in Übereinstimmung mit der ermittelten maximalen Gruppengröße, so dass der maximale Abstand zwischen Zellen einer Gruppe minimiert wird.

3. Computerprogrammprodukt, das Befehle umfasst, um einen Netzwerk-Steuerknoten zu veranlassen, das Verfahren nach Anspruch 1 oder 2 durchzuführen.

4. Netzwerk-Steuerknoten zum Zuweisen von Channel State Information-Referenzsignalen (CSI-RS) zu einer Vielzahl von Zellen, die in einem drahtlosen Kommunikationsnetzwerk betrieben werden, wobei die Vielzahl von Zellen dafür ausgelegt sind, mindestens einen Bereich mit überlappender Funkabdeckung zu umfassen;

wobei das drahtlose Kommunikationsnetzwerk eine heterogene LTE-Zweitkanal-Netzwerkumgebung umfasst und die Vielzahl von Zellen eine Vielzahl von kleinen Zellen umfasst, die innerhalb eines Abdeckungsbereichs einer Makrozelle betrieben werden, wobei die heterogene Netzwerkumgebung dafür konfiguriert ist, gemäß Phantomzellentechniken betrieben zu werden, bei denen eine kleine Zelle keine Steuerebenensignale überträgt und daher nicht anhand expliziter Steuerebenenmerkmale identifiziert werden kann;
wobei der Netzwerk-Steuerknoten eine Logik umfasst, die konfiguriert ist zum:
Aufteilen der Vielzahl von kleinen Zellen in mehrere Gruppen kleiner Zellen und für jede Gruppe kleiner Zellen:

(i) Zuweisen eines CSI-RS zu allen kleinen Zellen in jeder Gruppe kleiner Zellen;
(ii) Partitionieren der CSI-RS-Ressourcen, die dem zugewiesenen CSI-RS entsprechen, in N wechselseitig orthogonale, nicht überlappende Frequenzteilbänder; und
(iii) Anweisen jeder der kleinen Zellen in jeder Gruppe kleiner Zellen, das zugewiesene CSI-RS über genau eines der N Teilbänder zu senden und die CSI-RS-Ressourcen der verbleibenden N-1 Frequenzteilbänder, die den anderen kleinen Zellen innerhalb jeder Gruppe kleiner Zellen zugewiesen sind, stumm zu schalten.

## Revendications

1. Procédé effectué au niveau d'un nœud de contrôle de réseau d'allocation de signaux de référence d'information d'état de canal, CSI-RS, à une pluralité de cellules fonctionnant dans un réseau de communications sans fil, la pluralité de cellules étant agencée pour comprendre au moins une région de couverture radio chevauchante ;

dans lequel ledit réseau de communications sans fil comprend un déploiement de réseau hétérogène de co-canal LTE et ladite pluralité de cellules comprend une pluralité de petites cellules déployées à l'intérieur d'une zone de couverture d'une macrocellule, le déploiement de réseau hétérogène étant configuré pour fonctionner selon des techniques de cellule fantôme dans lesquelles une petite cellule ne transmet pas de signaux de plan de contrôle et ainsi ne peut pas être identifiée sur la base de caractéristiques de plan de contrôle explicites ;
le procédé comprenant :
la séparation de la pluralité de petites cellules en de multiples groupes de petites cellules, et pour chaque groupe de petites cellules :

(i) l'assignation d'un CSI-RS à toutes les petites cellules dans chaque dit groupe de petites cellules ;
(ii) le partitionnement des ressources CSI-RS correspondant au CSI-RS assigné en N sous-bandes de fréquences non chevauchantes orthogonales mutuelles ; et
(iii) l'instruction de chacune des petites cellules dans chaque dit groupe de petites cellules pour diffuser le CSI-RS assigné sur exactement une des N sous-bandes et mettre en sourdine les ressources CSI-RS des N-1 sous-bandes de fréquences restantes qui sont assignées aux autres petites cellules à l'intérieur de chaque dit groupe de petites cellules.

2. Procédé selon la revendication 1, dans lequel la séparation des petites cellules en groupes comprend : le regroupement de ladite pluralité de cellules déterminées comme étant le plus mutuellement interférentes conformément à ladite taille de groupe maximale déterminée de sorte que la distance maximale entre des cellules d'une groupe soit minimisée.

3. Produit de programme informatique comprenant des instructions pour amener un nœud de contrôle de réseau à effectuer le procédé selon la revendication 1 ou 2.

4. Nœud de contrôle de réseau exploitable pour allouer des signaux de référence d'information d'état de canal, CSI-RS, à une pluralité de cellules fonctionnant dans un réseau de communications sans fil, la pluralité de cellules étant agencée pour comprendre au moins une région de couverture radio chevauchante ;

dans lequel ledit réseau de communications sans fil comprend un déploiement de réseau hétérogène de co-canal LTE et ladite pluralité de cellules comprend une pluralité de petites cellules déployées à l'intérieur d'une zone de couverture d'une macrocellule, le déploiement de réseau hétérogène étant configuré pour fonctionner selon des techniques de cellule fantôme dans lesquelles une petite cellule ne transmet pas de signaux de plan de contrôle et ainsi ne peut pas être identifiée sur la base de caractéristiques de plan de contrôle explicites ;
le nœud de contrôle de réseau comprenant une logique configurée pour :
séparer la pluralité de petites cellules en de multiples groupes de petites cellules, et pour chaque groupe de petites cellules :

(i) assigner un CSI-RS à toutes les petites cellules dans chaque dit groupe de petites cellules ;
(ii) partitionner les ressources CSI-RS correspondant au CSI-RS assigné en N sous-bandes de fréquences non chevauchantes orthogonales mutuelles ; et
(iii) donner pour instruction à chacune des petites cellules dans chaque dit groupe de petites cellules de diffuser le CSI-RS assigné sur exactement une des N sous-bandes et mettre en sourdine les ressources CSI-RS des N-1 sous-bandes de fréquences restantes qui sont assignées aux autres petites cellules à l'intérieur de chaque dit groupe de petites cellules.

Handover failure rate without discontinuous reception (DRX). Macro and small cells are assumed to be connected via non-ideal backhaul and operate on the same (intra-frequency) or different (inter-frequency) carrier frequency, respectively.

FIG. 1

a) Traditional macrocell and small cells

b) Network with split control-plane and user-plane

Illustration of (a) traditional of cellular network with the control plane tied to the
data plane, and (b) proposed network characterized by a split of the control and user plane.

FIG. 2

Example of CSI-RS collision and confusion.

FIG. 3

CQI reporting types.

FIG. 4

$$N_{RB}^{DL} = 24 \text{ Resource Blocks}$$

The structure of subbands and bandwidth parts.

FIG. 5

Dynamic partitioning of CSI-RS subband among multiple cells with the
capability to operate in sleep cycles. Two subplots indicate two cases of cell activity.

## FIG. 6

Exemplary algorithm for determining the strongest group cell by using
sequential reduction of the measurement bandwidth.

## FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013112829 A
- US 20140087720 A